# EUROPÄISCHE PATENTSCHRIFT

(11) **EP 3 672 839 B1**
(45) Veröffentlichungstag und Bekanntmachung des Hinweises auf die Patenterteilung: **14.07.2021**
(21) Anmeldenummer: 18753347.6
(22) Anmeldetag: 03.08.2018
(51) Int. Cl.: B60R 21/203

(54) **GASSACKMODUL FÜR EIN FAHRZEUGLENKRAD**
AIRBAG MODULE FOR A VEHICLE STEERING WHEEL
MODULE DE COUSSIN GONFLABLE POUR UN VOLANT DE VÉHICULE

(30) Priorität: 24.08.2017 DE 102017119335
(43) Veröffentlichungstag der Anmeldung: 01.07.2020
(73) Patentinhaber: ZF Automotive Safety Germany GmbH, 63743 Aschaffenburg (DE)
(72) Erfinder: BACHMANN, Stefan, 63872 Heimbuchenthal (DE)
(74) Vertreter: ZF Patentabteilung - DIPS
(86) Internationale Anmeldenummer: PCT/EP2018/071154
(87) Internationale Veröffentlichungsnummer: WO 2019/038065

(56) Entgegenhaltungen:
- EP-B1- 1 020 332
- EP-B1- 2 445 761
- DE-A1-102009 006 077

## Beschreibung

Die Erfindung betrifft ein Gassackmodul für ein Fahrzeuglenkrad, mit einem Modulboden zur festen Montage am Fahrzeuglenkrad, der eine Bodenöffnung aufweist, einem Schwingungstilgerring zur schwingfähigen Befestigung eines Gasgenerators am Modulboden, wobei der Schwingungstilgerring eine Ringachse und einen Montageflansch für den Gasgenerator aufweist, wobei der Schwingungstilgerring ausgehend vom Montageflansch eine elastische Tilgerwand aufweist, die sich in axialer Richtung zum Modulboden hin erstreckt sowie um die Ringachse verläuft, und wobei der Schwingungstilgerring ausgehend vom Montageflansch mehrere elastische Tilgerfüße zur Befestigung am Modulboden aufweist, die sich in axialer Richtung zum Modulboden hin erstrecken.

Bei vielen Fahrzeuglenkrädern treten im Leerlauf oder in bestimmten Geschwindigkeitsbereichen des Fahrzeugs Vibrationen auf, die vom Fahrer als störend empfunden werden. Diese Vibrationen sind unter anderem auf die starre Kopplung des Fahrzeuglenkrads mit der Lenksäule zurückzuführen.

Es ist bekannt, zur Vermeidung der unerwünschten Lenkradschwingungen sogenannte Schwingungstilger einzusetzen, um die Eigenfrequenz des Gesamtsystems so abzustimmen, dass sie in einem unkritischen Bereich liegt. Derzeit wird als gegenschwingende Tilgermasse beispielsweise der Gasgenerator eines im Lenkrad angeordneten Gassackmoduls eingesetzt.

So offenbart die DE 10 2009 006 077 A1 eine Gassackeinheit mit einem Gasgenerator, der als Schwingungstilger eingesetzt wird, einem Gehäuse, das am Gehäuseboden einen Befestigungsflansch aufweist, und einem Diffuser, der den Gasgenerator umgibt, wobei der Diffuser an einem Halteabschnitt des Befestigungsflansches angebracht ist, der sich im Wesentlichen senkrecht zum Gehäuseboden erstreckt.

Die gattungsgemäße EP 2 445 761 B1 zeigt bereits ein Gassackmodul, bei dem der Gasgenerator über elastische Befestigungsfüße eines Schwingungstilgerrings schwingfähig an einem Generatorträger befestigt ist. Nach einer Auslösung des Gasgenerators steigt der Druck in einem Gassack an, wodurch der Gasgenerator in Richtung zum Generatorträger beaufschlagt wird. Sobald ein hinreichender Innendruck erreicht ist, bewegen sich der Gasgenerator und der Schwingungstilgerring unter Verformung der Befestigungsfüße zum Generatorträger hin, um eine Abdichtung zwischen Gasgenerator und Generatorträger zu bewirken, das heißt einen Spalt zwischen dem Gasgenerator und dem Generatorträger zu schließen.

Es hat sich allerdings herausgestellt, dass bis zur Abdichtung zwischen dem Gasgenerator und dem Generatorträger ein unerwünscht großes Gasvolumen aus dem Gassackmodul entweicht. Dieser Gasverlust kann zwar durch zusätzlichen Treibstoff kompensiert werden, was jedoch zu größeren Gasgeneratoren und zusätzlichen Kosten führt. Ferner weist der Gassack auch eine geringere Standzeit auf, da sich der Spalt nach der Entfaltung des Gassacks bei einem Absinken des Innendrucks wieder öffnet, wodurch sich der Druckabbau beschleunigt.

Aufgabe der Erfindung ist es, ein Gassackmodul mit einem schwingfähig gelagerten Gasgenerator zu schaffen, das bei einer Aktivierung des Gasgenerators möglichst geringe Gasverluste aufweist.

Erfindungsgemäß wird diese Aufgabe gelöst durch ein Gassackmodul der eingangs genannten Art, bei dem der Schwingungstilgerring mittels der Tilgerfüße so am Modulboden befestigt ist, dass die Tilgerwand bereits vor einer Aktivierung des Gassackmoduls am Modulboden anliegt sowie in axialer Richtung gegen den Modulboden beaufschlagt und elastisch verformt ist. Aufgrund dieser dauerhaften Vorspannung der Tilgerwand entsteht zwischen dem Schwingungstilgerring und dem Modulboden kein axialer Spalt, durch den in unerwünschter Weise Generatorgas über die Bodenöffnung nach außerhalb des Gassackmoduls entweichen könnte. In Umfangsrichtung ist die Tilgerwand vorzugsweise ringartig geschlossen ausgeführt und umschließt die Bodenöffnung des Modulbodens, sodass auch kein tangentialer Spalt vorhanden ist, über den Generatorgas entweichen könnte. Die Abdichtung zwischen dem Schwingungstilgerring und dem Modulboden wird somit insbesondere zu Beginn der Gassackentfaltung deutlich verbessert und eine unerwünschte Gasleckage entsprechend minimiert. Da der Schwingungstilgerring und der Modulboden vor einer Auslösung des Gasgenerators nun nicht mehr ausschließlich über die Tilgerfüße, sondern auch über die Tilgerwand dauerhaft gekoppelt sind, muss diese auch als Tilgerfeder bei der Abstimmung des Tilgersystems berücksichtigt werden. Beispielsweise lässt sich über die Vorspannung, die Wandstärke sowie die Wahl des für die Tilgerwand verwendeten Materials und der daraus resultierenden Elastizität eine zu eliminierende Schwingfrequenz mit geringem Aufwand einstellen.

Die Tilgerfüße bilden vorzugsweise eine Rast- oder Schnappverbindung mit dem Modulboden aus. Auf diese Weise lässt sich der Schwingungstilgerring ohne spezielles Werkzeug schnell und einfach am Modulboden montieren.

Gemäß einer Ausführungsform des Gassackmoduls weisen die Tilgerfüße jeweils einen Befestigungsabschnitt mit einem verdickten Außenquerschnitt und einer umlaufenden Tilgerfuß-Nut auf, wobei im Modulboden Befestigungsöffnungen vorgesehen sind und ein Rand jeder Befestigungsöffnung in die Tilgerfuß-Nut eines zugeordneten Tilgerfußes eingreift. Dadurch können die Tilgerfüße in die Befestigungsöffnungen eingeführt werden, bis jeweils ein Öffnungsrand unter elastischer Verformung des verdickten Außenquerschnitts in die zugeordnete Tilgerfuß-Nut einschnappt und der Schwingungstilgerring mit geringem Aufwand am Modulboden befestigt ist.

Die elastische Tilgerwand weist bevorzugt ein an den Modulboden angrenzendes, freies axiales Wandende auf, wobei im Modulboden radial angrenzend an das freie axiale Wandende ein Radialanschlag ausgebildet ist. Nach einer Auslösung des Gasgenerators steigt der Druck im Inneren des Gassacks an und beaufschlagt das freie axiale Wandende in radialer Richtung gegen den Radialanschlag des Modulbodens. Besonders bevorzugt entsteht ein geschlossener Ringkontakt, der eine übermäßige Verformung der elastischen Tilgerwand verhindert und darüber hinaus für eine äußerst zuverlässige, idealerweise weitgehend leckagefreie Abdichtung zwischen der Tilgerwand und dem Modulboden sorgt.

Besonders bevorzugt weist die Tilgerwand ein an den Modulboden angrenzendes, freies axiales Wandende auf, wobei im Modulboden eine Nut ausgebildet ist, in die das freie axiale Wandende eingreift.

Gemäß einer Ausführungsform des Gassackmoduls sind die Tilgerfüße einstückig in die umlaufende Tilgerwand integriert, insbesondere wobei die Tilgerfüße in axialer und radialer Richtung eine größere Abmessung als die Tilgerwand aufweisen. Alternativ ist auch denkbar, dass die Tilgerfüße radial versetzt zur umlaufenden Tilgerwand angeordnet sind.

Vorzugsweise sind die mehreren Tilgerfüße in Umfangsrichtung gleichmäßig verteilt angeordnet, insbesondere wobei der Schwingungstilgerring drei Tilgerfüße aufweist. Selbstverständlich sind auch Schwingungstilgerringe mit einer anderen Anzahl von Tilgerfüßen, insbesondere mit vier Tilgerfüßen denkbar.

Die elastischen Tilgerfüße weisen gemäß einer Ausführungsform des Gassackmoduls in axialer Richtung zumindest abschnittsweise einen Hohlquerschnitt auf. Durch diesen Hohlquerschnitt ergibt sich ein besonders geringer Schwingungswiderstand der Tilgerfüße. Dies ist vorteilhaft, da neben dem Schwingungswiderstand der Tilgerfüße auch ein Schwingungswiderstand der elastischen Tilgerwand berücksichtigt werden muss und ein resultierender Gesamt-Schwingungswiderstand nicht zu groß werden darf, um in einem gewünschten Frequenzbereich eine Schwingungstilgung zu erreichen.

Vorzugsweise ist der Schwingungstilgerring ein Zweikomponenten-Bauteil mit einer elastischen ersten Komponente, welche die Tilgerwand und die Tilgerfüße bildet, sowie einer weitgehend formstabilen zweiten Komponente, welche eine geringere Elastizität aufweist als die erste Komponente. Die erste Komponente ist bevorzugt ein elastisches Kunststoffmaterial, insbesondere ein Elastomer wie zum Beispiel Gummi oder Silikon, wohingegen die zweite Komponente bevorzugt ein vergleichsweise starres Kunststoffmaterial, insbesondere ein Thermoplast, oder ein Metall wie zum Beispiel Stahl ist. Aus Fertigungs- und Kostengründen ist der Schwingungstilgerring bevorzugt ein Zweikomponenten-Spritzgussteil aus zwei Kunststoffkomponenten.

Gemäß einer weiteren Ausführungsform des Gassackmoduls ist ein Gasgenerator vorgesehen, mit einem Generatorflansch, der in axialer Richtung am Montageflansch des Schwingungstilgerrings anliegt und in Umfangsrichtung vorzugsweise geschlossen umläuft, insbesondere wobei der Gasgenerator fest mit dem Schwingungstilgerring verbunden ist, beispielsweise verrastet, vercrimpt, verpresst oder verschraubt. Besonders bevorzugt laufen beide Flansche geschlossen um und liegen flächig aneinander an, sodass eine im Wesentlichen dichte Verbindung entsteht.

Weitere Merkmale und Vorteile der Erfindung ergeben sich aus der nachfolgenden Beschreibung einer bevorzugten Ausführungsformen unter Bezugnahme auf die Zeichnungen. In diesen zeigt:
- Figur 1 einen Schnitt durch ein Fahrzeuglenkrad mit einem erfindungsgemäßen Gassackmodul;
- Figur 2 einen Schnitt durch einen Schwingungstilgerring des Gassackmoduls gemäß Figur 1;
- Figur 3 einen Detailschnitt durch das Gassackmodul gemäß Figur 1 im Bereich einer elastischen Tilgerwand des Schwingungstilgerrings;
- Figur 4 einen Detailschnitt durch das Gassackmodul gemäß Figur 1 im Bereich eines elastischen Tilgerfußes des Schwingungstilgerrings;
- Figur 5 eine perspektivische Draufsicht des Schwingungstilgerrings gemäß Figur 2;
- Figur 6 eine perspektivische Untersicht des Schwingungstilgerrings gemäß Figur 2;
- Figur 7 eine axiale Draufsicht des Schwingungstilgerrings gemäß Figur 2;
- Figur 8 eine axiale Draufsicht eines Generatorträgers des Gassackmoduls gemäß Figur 1;
- Figur 9 eine perspektivische Draufsicht des Gassackmoduls gemäß Figur 1 in einem teilmontierten Zustand; und
- Figur 10 eine perspektivische Untersicht des teilmontierten Gassackmoduls gemäß Figur 9.

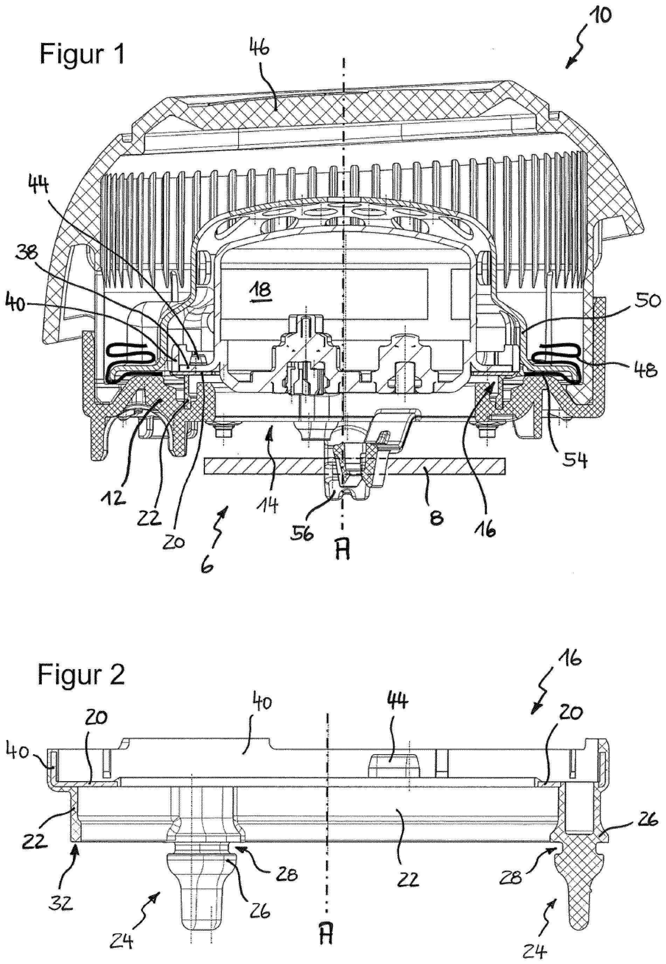

Die Figur 1 zeigt ein Gassackmodul 10 für ein Fahrzeuglenkrad 6, mit einem Modulboden 12, der fest an einem schematisch angedeuteten Lenkradskelett 8 des Fahrzeuglenkrads 6 montiert ist und eine Bodenöffnung 14 aufweist, sowie einem Schwingungstilgerring 16 zur schwingfähigen Befestigung eines Gasgenerators 18 am Modulboden 12. Der Modulboden 12 ist im vorliegenden Ausführungsbeispiel ein Generatorträger, wobei der Gasgenerator 18 sich zumindest teilweise durch die Bodenöffnung 14 erstreckt und/oder über die Bodenöffnung 14 an eine elektrische Steuereinheit anschließbar ist.

Der in Figur 2 detailliert dargestellte Schwingungstilgerring 16 umfasst eine Ringachse A und einen in Umfangsrichtung geschlossen umlaufenden Montageflansch 20 für den Gasgenerator 18, wobei der Schwingungstilgerring 16 ausgehend vom Montageflansch 20 eine elastische Tilgerwand 22 aufweist, die sich in axialer Richtung zum Modulboden 12 hin erstreckt sowie in Umfangsrichtung geschlossen um die Ringachse A umläuft.

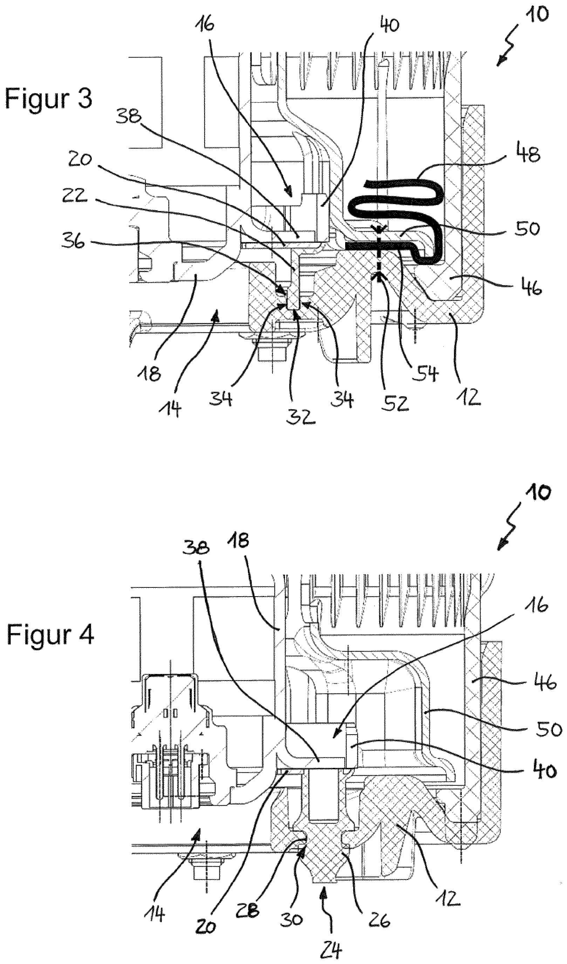

Ferner weist der Schwingungstilgerring 16 zur Befestigung am Modulboden 12 mehrere elastische Tilgerfüße 24 auf, die sich in axialer Richtung erstrecken, wobei der Schwingungstilgerring 16 mittels der Tilgerfüße 24 so am Modulboden 12 befestigt ist, dass die Tilgerwand 22 bereits vor einer Aktivierung des Gasgenerators 18 am Modulboden 12 anliegt sowie in axialer Richtung gegen den Modulboden 12 beaufschlagt und elastisch verformt ist (siehe auch Figuren 3 und 4). Aufgrund dieser dauerhaften axialen Vorspannung der Tilgerwand 22 gegen den als Generatorträger ausgeführten Modulboden 12 entsteht eine im Wesentlichen dichte Verbindung, welche bereits unmittelbar nach der Auslösung des Gasgenerators 18 eine Gasleckage nach außerhalb des Gassackmoduls 10 weitgehend verhindert.

Anhand der Figur 4 wird deutlich, dass die Tilgerfüße 24 zur einfachen und raschen Montage des Schwingungstilgerrings 16 mit dem Modulboden eine Rast- oder Schnappverbindung mit dem Modulboden 12 ausbilden.

Konkret weisen die Tilgerfüße 24 jeweils einen Befestigungsabschnitt 26 mit einem verdickten Außenquerschnitt und einer umlaufenden Tilgerfuß-Nut 28 auf, wobei im Modulboden 12 Befestigungsöffnungen 30 vorgesehen sind und ein Rand jeder Befestigungsöffnung 30 in die Tilgerfuß-Nut 28 eines zugeordneten Tilgerfußes 24 eingreift.

Die Tilgerwand 22 weist gemäß Figur 3 ein an den Modulboden 12 axial angrenzendes, freies axiales Wandende 32 auf, wobei im Modulboden 12 radial angrenzend an das freie axiale Wandende 32 ein Radialanschlag 34 ausgebildet ist. Durch diesen, insbesondere radial einwärts der Tilgerwand 22 angeordneten Radialanschlag 34 wird das freie Wandende 32 bei einer Druckbeaufschlagung mit Generatorgas gegen den Radialanschlag 34 gedrückt. Das freie Wandende 32 kann sich daher nicht radial einwärts verformen und folglich auch keinen Gasstrom über die Bodenöffnung 14 nach außerhalb des Gassackmoduls 10 freigeben. Besonders bevorzugt sind sowohl die Tilgerwand 22 als auch der Radialanschlag 34 in Umfangsrichtung umlaufend ausgebildet, sodass dazwischen ein geschlossener Ringkontakt entsteht, der mit ansteigendem Gasdruck eine zunehmende Dichtigkeit aufweist.

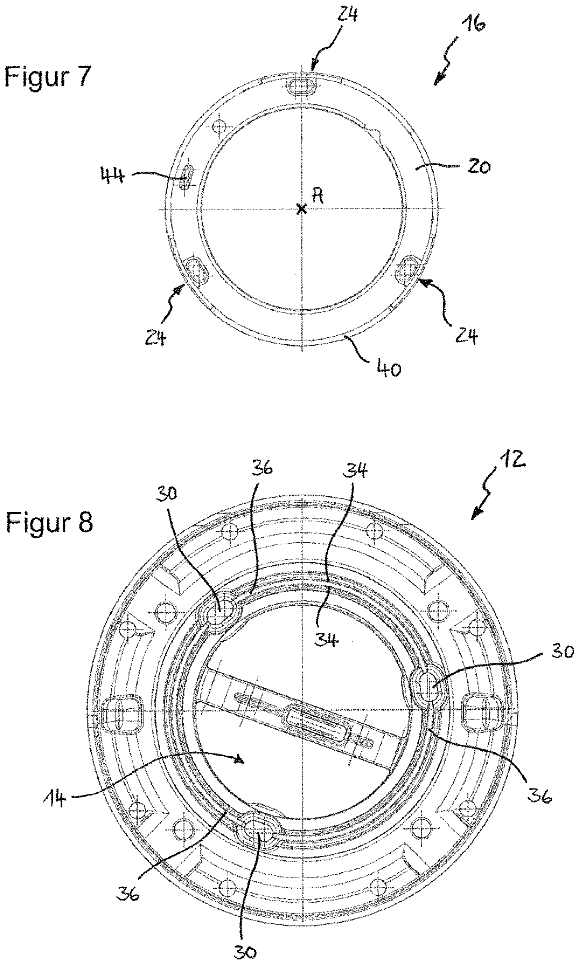

Im dargestellten Ausführungsbeispiel des Gassackmoduls 10 ist im Modulboden 12 sowohl radial einwärts der Tilgerwand 22 als auch radial auswärts der Tilgerwand 22 jeweils ein Radialanschlag 34 vorgesehen, wobei die beiden Radialanschläge 34 eine Nut 36 definieren. Gemäß Figur 8 ist mit anderen Worten im Modulboden 12 eine Nut 36 ausgebildet, in die das freie axiale Wandende 32 der Tilgerwand 22 eingreift. Durch diese Nut 36 wird das freie Wandende 32 in beiden radialen Richtungen fixiert, insbesondere weitgehend spielfrei fixiert.

Aufgrund ihres dauerhaften Kontaktes mit dem fest am Lenkradskelett 8 montierbaren Modulboden 12 erzeugt auch die Tilgerwand 22 einen Widerstand bei der Schwingungstilgung. Daher ist es im Gegenzug vorteilhaft, den Schwingungswiderstand der Tilgerfüße 24 zu verringern, um einen zu hohen Gesamt-Schwingungswiderstand, das heißt eine insgesamt zu hohe Steifigkeit des Tilgersystems zu verhindern.

Wie in Figur 2, 4 und 5 angedeutet, weisen die elastischen Tilgerfüße 24 zum Beispiel in axialer Richtung zumindest abschnittsweise einen Hohlquerschnitt auf, um den Schwingungswiderstand zu verringern.

Im Übrigen ist der Schwingungstilgerring 16 im dargestellten Ausführungsbeispiel ein Zweikomponenten-Bauteil, mit einer elastischen ersten Komponente, welche die Tilgerwand 22 und die Tilgerfüße 24 bildet, sowie einer weitgehend formstabilen zweiten Komponente, welche eine geringere Elastizität aufweist als die erste Komponente. Auf diese Weise lässt sich auch über das Material der ersten Komponente eine gewünschte Steifigkeit des Tilgersystems beeinflussen, ohne dass gleichzeitig Stabilitätsanforderungen des Schwingungstilgerrings 16 erfüllt werden müssen. Die notwendige Stabilität, insbesondere des Montageflansches 20 des Schwingungstilgerrings 16, wird über eine geeignete Materialwahl der zweiten Komponente sichergestellt. Die erste Komponente ist bevorzugt ein elastisches Kunststoffmaterial, insbesondere ein Elastomer wie zum Beispiel Gummi oder Silikon, wohingegen die zweite Komponente bevorzugt ein vergleichsweise festes und starres Kunststoffmaterial, insbesondere ein Thermoplast, oder ein Metall wie zum Beispiel Stahl ist. Aus Fertigungs- und Kostengründen ist der Schwingungstilgerring 16 besonders bevorzugt ein Zweikomponenten-Spritzgussteil aus zwei voneinander verschiedenen Kunststoffkomponenten.

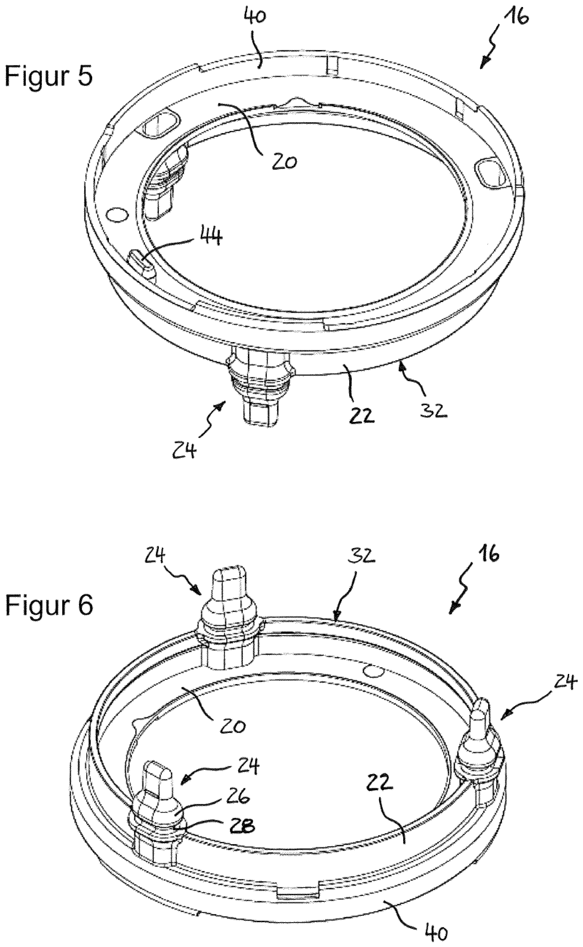

In der Ausführungsvariante des Schwingungstilgerrings 16 gemäß Figur 6 sind die Tilgerfüße 24 einstückig in die umlaufende Tilgerwand 22 integriert. Hierbei weisen die Tilgerfüße 24 in axialer und radialer Richtung eine größere Abmessung auf, als die Tilgerwand 22. Alternativ ist jedoch auch denkbar, dass die Tilgerfüße 24 radial versetzt zu einer geschlossen umlaufenden Tilgerwand 22 angeordnet sind.

Die Draufsicht des Schwingungstilgerrings 16 gemäß Figur 7 verdeutlicht, dass die mehreren Tilgerfüße 24 in Umfangsrichtung gleichmäßig verteilt angeordnet sind, wobei im dargestellten Ausführungsbeispiel konkret drei Tilgerfüße 24 vorgesehen sind. Selbstverständlich kann der Schwingungstilgerring 16 auch eine andere Anzahl von Tilgerfüßen 24, insbesondere vier Tilgerfüße 24 aufweisen.

Im Folgenden wird anhand der Figuren 7 bis 10 kurz auf den Zusammenbau des Gassackmoduls 10 eingegangen, wobei die Figur 7 eine Draufsicht des Schwingungstilgerrings 16 und die Figur 8 eine Draufsicht des als Generatorträger ausgebildeten Modulbodens 12 zeigt.

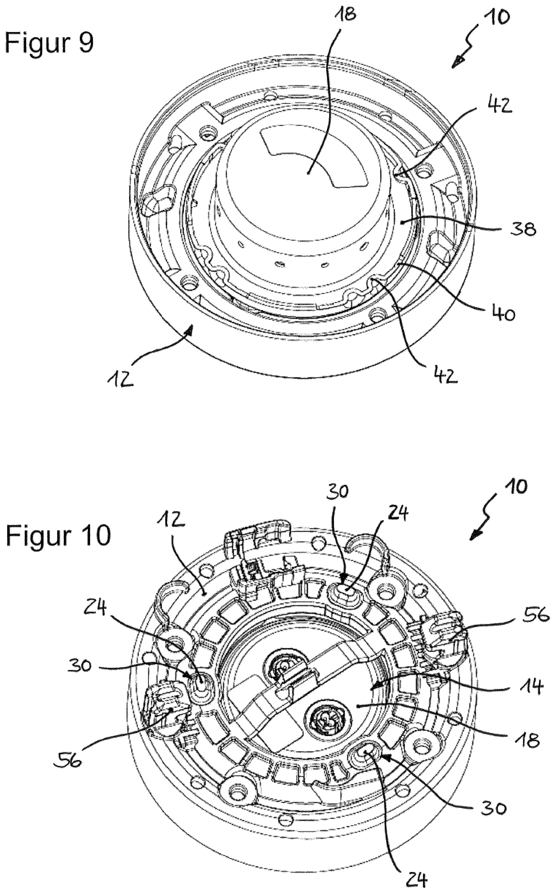

Ferner ist ein in den Figuren 1 und 9 dargestellter Gasgenerator 18 vorgesehen, mit einem in Umfangsrichtung geschlossen umlaufenden Generatorflansch 38, der in axialer Richtung am Montageflansch 20 des Schwingungstilgerrings 16 anliegt. Insbesondere laufen beide Flansche 20, 38 geschlossen um die Ringachse A um und liegen flächig aneinander an, sodass eine im Wesentlichen dichte Verbindung entsteht. Der Gasgenerator 18 ist dabei fest mit dem Schwingungstilgerring 16 verbunden, beispielsweise verrastet, vercrimpt, verpresst, verschraubt.

Im vorliegenden Ausführungsbeispiel erfolgt die Befestigung des Gasgenerators 18 konkret mittels einer Umfangswand 40, die radial außenseitig am Montageflansch 20 des Schwingungstilgerrings 16 angeformt ist und sich entgegen der Tilgerwand 22 in axialer Richtung erstreckt (siehe auch Figuren 2 und 5).

Gemäß Figur 9 wurde der Gasgenerator 18 mit seinem Generatorflansch 38 axial so auf den Montageflansch 20 des Schwingungstilgerrings 16 gesetzt, dass die Umfangswand 40 radial unmittelbar an den Generatorflansch 38 angrenzt und diesen umgibt. Anschließend wurden mehrere in Umfangsrichtung beabstandete Befestigungsabschnitte 42 der Umfangswand 40 mit einem geeigneten Werkzeug radial einwärts verformt, sodass sie den Generatorflansch 38 radial überlappen und vorzugsweise auch axial gegen den Montageflansch 20 fixieren. Ferner weist der Montageflansch 20 noch einen Verdrehsicherungszapfen 44 auf, der sich durch eine entsprechende Verdrehsicherungsöffnung im Generatorflansch 38 erstreckt, um den Gasgenerator 18 in Umfangsrichtung relativ zum Schwingungstilgerring 16 in einer vorgegebenen Position zu fixieren. Damit ist der Gasgenerator 18 dauerhaft und fest mit dem Schwingungstilgerring 16 verbunden.

Anschließend wird die Baugruppe aus Gasgenerator 18 und Schwingungstilgerring 16 in den Modulboden 12 eingesetzt, wobei das freie Wandende 32 der Tilgerwand 22 gemäß Figur 3 in die Nut 36 eingreift und die Tilgerfüße 24 gemäß Figur 4 in die Befestigungsöffnungen 30 des Modulbodens 12 eingeknüpft sind (siehe auch Figur 10).

Danach wird eine Modulabdeckung 46 zusammen mit einem gefalteten Gassack 48 und einem Gassackhalteblech 50 am Modulboden 12 montiert, wobei das Gassackhalteblech 50, beispielsweise durch in Figur 3 angedeutete Schrauben 52, am Modulboden 12 befestigt wird und dabei die Modulabdeckung 46 sowie den Gassack 48 über seinen Gassackmund 54 zwischen dem Gassackhalteblech 50 und dem Modulboden 12 festklemmt.

Schließlich kann das gesamte vormontierte Gassackmodul 10, beispielsweise durch am Modulboden 12 angeformte Haken 56 (siehe Figuren 1 und 10), am Lenkradskelett 8 des Fahrzeuglenkrads 6 fixiert, insbesondere verrastet werden.

## Patentansprüche

1. Gassackmodul für ein Fahrzeuglenkrad, mit
einem Modulboden (12) zur festen Montage am Fahrzeuglenkrad, der eine Bodenöffnung (14) aufweist, und
einem Schwingungstilgerring (16) zur schwingfähigen Befestigung eines Gasgenerators (18) am Modulboden (12),
wobei der Schwingungstilgerring (16) eine Ringachse (A) und einen Montageflansch (20) für den Gasgenerator (18) aufweist,
wobei der Schwingungstilgerring (16) ausgehend vom Montageflansch (20) eine elastische Tilgerwand (22) aufweist, die sich in axialer Richtung zum Modulboden (12) hin erstreckt sowie in Umfangsrichtung um die Ringachse (A) verläuft,
und wobei der Schwingungstilgerring (16) ausgehend vom Montageflansch (20) mehrere elastische Tilgerfüße (24) zur Befestigung am Modulboden (12) aufweist, die sich in axialer Richtung zum Modulboden (12) hin erstrecken,
**dadurch gekennzeichnet, dass** der Schwingungstilgerring (16) mittels der Tilgerfüße (24) so am Modulboden (12) befestigt ist, dass die Tilgerwand (22) bereits vor einer Aktivierung des Gassackmoduls (10) am Modulboden (12) anliegt sowie in axialer Richtung gegen den Modulboden (12) beaufschlagt und elastisch verformt ist.

2. Gassackmodul nach Anspruch 1, **dadurch gekennzeichnet, dass** die Tilgerfüße (24) eine Rastverbindung oder eine Schnappverbindung mit dem Modulboden (12) ausbilden.

3. Gassackmodul nach wenigstens einem der vorhergehenden Ansprüche, **dadurch gekennzeichnet, dass** die Tilgerfüße (24) jeweils einen Befestigungsabschnitt (26) mit einem verdickten Außenquerschnitt und einer umlaufenden Tilgerfuß-Nut (28) aufweisen, wobei im Modulboden (12) Befestigungsöffnungen (30) vorgesehen sind und ein Rand jeder Befestigungsöffnung (30) in die Tilgerfuß-Nut (28) eines zugeordneten Tilgerfußes (24) eingreift.

4. Gassackmodul nach wenigstens einem der vorhergehenden Ansprüche, **dadurch gekennzeichnet, dass** die Tilgerwand (22) ein an den Modulboden (12) angrenzendes, freies axiales Wandende (32) aufweist, wobei im Modulboden (12) radial angrenzend an das freie axiale Wandende (32) ein Radialanschlag (34) ausgebildet ist.

5. Gassackmodul nach wenigstens einem der vorhergehenden Ansprüche, **dadurch gekennzeichnet, dass** die Tilgerwand (22) ein an den Modulboden (12) angrenzendes, freies axiales Wandende (32) aufweist, wobei im Modulboden (12) eine Nut (36) ausgebildet ist, in die das freie axiale Wandende (32) eingreift.

6. Gassackmodul nach wenigstens einem der vorhergehenden Ansprüche, **dadurch gekennzeichnet, dass** die Tilgerfüße (24) einstückig in die umlaufende Tilgerwand (22) integriert sind.

7. Gassackmodul nach wenigstens einem der vorhergehenden Ansprüche, **dadurch gekennzeichnet, dass** die mehreren Tilgerfüße (24) in Umfangsrichtung gleichmäßig verteilt angeordnet sind, insbesondere wobei der Schwingungstilgerring (16) drei Tilgerfüße (24) aufweist.

8. Gassackmodul nach wenigstens einem der vorhergehenden Ansprüche, **dadurch gekennzeichnet, dass** die elastischen Tilgerfüße (24) in axialer Richtung zumindest abschnittsweise einen Hohlquerschnitt aufweisen.

9. Gassackmodul nach wenigstens einem der vorhergehenden Ansprüche, **dadurch gekennzeichnet, dass** der Schwingungstilgerring (16) ein Zweikomponenten-Bauteil ist, mit einer elastischen ersten Komponente, welche die Tilgerwand (22) und die Tilgerfüße (24) bildet, sowie einer zweiten Komponente, welche eine geringere Elastizität aufweist als die erste Komponente.

10. Gassackmodul nach wenigstens einem der vorhergehenden Ansprüche, **dadurch gekennzeichnet, dass** ein Gasgenerator (18) vorgesehen ist, mit einem Generatorflansch (38), der in axialer Richtung am Montageflansch (20) des Schwingungstilgerrings (16) anliegt, insbesondere wobei der Gasgenerator (18) fest mit dem Schwingungstilgerring (16) verbunden ist.

## Claims

1. An airbag module for a vehicle steering wheel, comprising
a module base (12) for fixed mounting on the vehicle steering wheel, which module base has a base opening (14), and
a vibration absorber ring (16) for fastening a gas generator (18) to the module base (12) such that said gas generator can vibrate,
wherein the vibration absorber ring (16) has a ring axis (A) and a mounting flange (20) for the gas generator (18),
wherein the vibration absorber ring (16) has a resilient absorber wall (22), starting from the mounting flange (20), which absorber wall extends in an axial direction toward the module base (12) and extends around the ring axis (A) in the circumferential direction,
and wherein the vibration absorber ring (16) has a plurality of resilient absorber feet (24) for fastening to the module base (12) starting from the mounting flange (20), which absorber feet extend in the axial direction to the module base (12),
**characterized in that** the vibration absorber ring (16) is fastened to the module base (12) by means of the absorber feet (24) such that the absorber wall (22) bears against the module base (12) already before activation of the airbag module (10) and acts in an axial direction against the module base (12) and is resiliently deformed.

2. The airbag module according to claim 1, **characterized in that** the absorber feet (24) form a detent connection or a snap-on connection with the module base (12).

3. The airbag module according to at least one of the preceding claims, **characterized in that** each of the absorber feet (24) has a mounting portion (26) having a thickened outer cross-section and a peripheral absorber foot groove (28), wherein in the module base (12) fastening openings (30) are provided and an edge of each fastening opening (30) engages in the absorber foot groove (28) of an associated absorber foot (24).

4. The airbag module according to at least one of the preceding claims, **characterized in that** the absorber wall (22) includes a free axial wall end (32) adjacent to the module base (12), wherein a radial stop (34) is formed in the module base (12) radially adjacent to the free axial wall end (32).

5. The airbag module according to at least one of the preceding claims, **characterized in that** the absorber wall (22) has a free axial wall end (32) adjacent to the module base (12), wherein a groove (36) in which the free axial wall end (32) engages is formed in the module base (12).

6. The airbag module according to at least one of the preceding claims, **characterized in that** the absorber feet (24) are integrated in the peripheral absorber wall (22) in one piece.

7. The airbag module according to at least one of the preceding claims, **characterized in that** the plural absorber feet (24) are arranged to be evenly spread in the circumferential direction, especially wherein the vibration absorber ring (16) includes three absorber feet (24).

8. The airbag module according to at least one of the preceding claims, **characterized in that** the resilient absorber feet (24) at least in portions have a hollow cross-section in an axial direction.

9. The airbag module according to at least one of the preceding claims, **characterized in that** the vibration absorber ring (16) is a two-component part, comprising a resilient first component which forms the absorber wall (22) and the absorber feet (24) and a second component which is less resilient than the first component.

10. The airbag module according to at least one of the preceding claims, **characterized in that** the gas generator (18) is provided, comprising a generator flange (38) which bears against the mounting flange (20) of the vibration absorber ring (16) in an axial direction, especially wherein the gas generator (18) is fixedly connected to the vibration absorber ring (16).

## Revendications

1. Module airbag pour volant de véhicule, avec
une base de module (12) pour un montage fixe sur le volant du véhicule, qui présente une ouverture de la base (14), et
un anneau amortisseur de vibrations (16) pour monter un générateur de gaz (18) sur la base du module (12) de manière à ce qu'il puisse osciller,
pour lequel l'anneau amortisseur de vibrations (16) présente un axe annulaire (A) et une bride de montage (20) pour le générateur de gaz (18),
pour lequel l'anneau amortisseur de vibrations (16) présente, en partant de la bride de montage (20) une paroi amortissante élastique (22), laquelle s'étend dans la direction axiale vers la base du module (12) et s'étend dans la direction circonférentielle autour de l'axe annulaire (A),
et pour lequel l'anneau amortisseur de vibrations (16) présente en partant de la bride de montage (20), une pluralité de pieds amortisseurs élastiques (24) pour la fixation à la base du module (12), lesquels pieds s'étendent dans la direction axiale vers la base du module (12),
**caractérisé en ce que** l'anneau amortisseur de vibrations (16) est fixé à la base du module (12) au moyen des pieds amortisseurs (24), de telle sorte que la paroi de amortissante (22) s'appuie déjà sur la base du module (12) avant l'activation du module airbag (10), et est sollicitée et déformée élastiquement dans la direction axiale contre la base du module (12).

2. Module airbag selon la revendication 1, **caractérisé en ce que** les pieds amortisseurs (24) forment une connexion par encliquetage ou une connexion par clipsage avec la base du module (12).

3. Module airbag selon au moins l'une des revendications précédentes, **caractérisé en ce que** les pieds amortisseurs (24) présentent chacun une section de fixation (26) avec une section transversale extérieure épaissie et une rainure de pied amortisseur (28) périphérique, pour lequel des ouvertures de fixation (30) sont prévues dans la base du module (12) et un bord de chaque ouverture de fixation (30) s'engage dans la rainure de pied amortisseur (28) d'un pied amortisseur (24) associé.

4. Module airbag selon au moins une des revendications précédentes, **caractérisé en ce que** la paroi amortissante (22) présente une extrémité de paroi axiale libre (32) adjacente à la base du module (12), pour lequel une butée radiale (34) est formée dans la base du module (12) radialement adjacente à l'extrémité de paroi axiale libre (32).

5. Module airbag selon au moins une des revendications précédentes, **caractérisé en ce que** la paroi amortissante (22) a une extrémité de paroi axiale libre (32) adjacente à la base du module (12), pour lequel une rainure (36) est formée dans la base du module (12), rainure dans laquelle l'extrémité de paroi axiale libre (32) s'engage.

6. Module airbag selon au moins l'une des revendications précédentes, **caractérisé en ce que** les pieds amortisseurs (24) sont intégrés d'un seul tenant dans la paroi circonférentielle amortissante (22).

7. Module airbag selon au moins l'une des revendications précédentes, **caractérisé en ce que** la pluralité de pieds amortisseurs (24) est disposée de manière uniformément répartie dans la direction circonférentielle, pour l'anneau amortisseur de vibrations (16) présente notamment trois pieds d'absorption (24).

8. Module airbag selon au moins l'une des revendications précédentes, **caractérisé en ce que** les pieds amortisseurs élastiques (24) présentent une section transversale creuse dans la direction axiale, au moins par tronçons.

9. Module airbag selon au moins une des revendications précédentes, **caractérisé en ce que** l'anneau amortisseur de vibrations (16) est une construction à deux composants, avec un premier composant élastique, lequel forme la paroi amortissante (22) et les pieds amortisseurs (24) ainsi qu'un deuxième composant, lequel présente une élasticité plus faible que le premier composant.

10. Module airbag selon au moins l'une des revendications précédentes, **caractérisé en ce qu'**il est prévu un générateur de gaz (18) muni d'une une bride de générateur (38) qui s'appuie en direction axiale sur la bride de montage (20) de l'anneau amortisseur de vibrations (16), pour lequel le générateur de gaz (18) est notamment relié fixe à l'anneau amortisseur de vibrations (16).
